# DEMANDE DE BREVET EUROPEEN

(11) **EP 2 196 909 A1**
(43) Date de publication de la demande: **16.06.2010**
(21) Numéro de dépôt: 09178702.8
(22) Date de dépôt: 10.12.2009
(51) Int. Cl.: G06F 11/27

(54) **Procédé et dispositif de détection de non régression d'un système d'entrée/sortie dans un environnement de simulation**

(30) Priorité: 10.12.2008 FR 0858446
(71) Demandeur: Airbus Operations, 31060 Toulouse (FR)
(72) Inventeur: Dessertenne, Frank, 31770 Colomiers (FR); Copin, Jean-François, 31000 Toulouse (FR)
(74) Mandataire: Imbert de Tremiolles, Ghislain

(57) **Abrégé**

L'invention a notamment pour objet un procédé et un dispositif de détection de non régression d'un système d'entrée/sortie à partir d'un poste distant comprenant un outil de test adapté à exécuter une commande de test dudit système d'entrée/sortie. Lesdits système d'entrée/sortie et poste distant sont chacun reliés à un réseau de communication. Le procédé comprend la transmission (305) audit poste distant d'une instruction de lancement dudit outil de test et d'une instruction d'exécution de ladite commande de test (320) ainsi que la transmission (315) à un dispositif d'enregistrement relié audit réseau de communication d'une instruction pour enregistrer des données, correspondant au résultat d'exécution de ladite commande, circulant sur ledit réseau de communication. Après réception, la donnée enregistrée peut être analysée (335) selon une donnée de référence correspondant au résultat attendu de l'exécution de ladite commande.

## Description

La présente invention concerne le test de systèmes dans un environnement de simulation et plus particulièrement un procédé et un dispositif de détection de non régression d'un système d'entrée/sortie dans un environnement de simulation.

La simulation de l'intégration de composants dans un véhicule, en particulier dans un aéronef, est notamment utilisée pour assurer le développement et l'intégration des systèmes électroniques et/ou informatiques embarqués dans celui-ci.

Ainsi, l'intégration de composants dans des véhicules fait l'objet de simulations selon lesquelles des dispositifs électroniques d'entrée/sortie, ou cartes d'entrée/sortie, sont utilisés comme interface entre les composants réels du véhicule, tels que, par exemple, des calculateurs, des capteurs et des actionneurs, et un environnement de simulation comprenant généralement un ou plusieurs serveurs ou ordinateurs utilisés pour simuler le comportement du véhicule ou d'une partie de celui-ci. Chaque carte d'entrée/sortie dispose d'un nombre déterminé de voies d'entrée et de voies de sortie.

La complexité de l'environnement de simulation est liée à celle de l'ensemble des composants du véhicule mis en oeuvre. Dans le domaine des aéronefs, il est généralement nécessaire de faire appel à plusieurs ordinateurs ou serveurs pour simuler les différentes situations auxquelles les composants sont susceptibles d'avoir à faire face. Un réseau, permettant la communication entre les différents ordinateurs ou serveurs et les dispositifs électroniques d'entrée/sortie, est généralement utilisé.

Le réseau ainsi formé est, par exemple, du type « *switch fabric* », basé sur une architecture commutée, c'est-à-dire que les équipements terminaux chargés de l'émission et de la réception des données s'organisent autour des commutateurs chargés du transport de ces données. Le commutateur est chargé d'émettre en parallèle des requêtes en provenance des ordinateurs ou des serveurs à destination des cartes d'entrée/sortie et des réponses en provenance des cartes d'entrée/sortie vers les ordinateurs ou les serveurs. Une même requête et une même réponse doivent pouvoir être adressées par le commutateur à plusieurs destinataires.

Le réseau utilisé peut être basé sur un standard existant, par exemple le standard Ethernet (IEEE 802.3) qui décrit un protocole de réseau local à commutation de paquets.

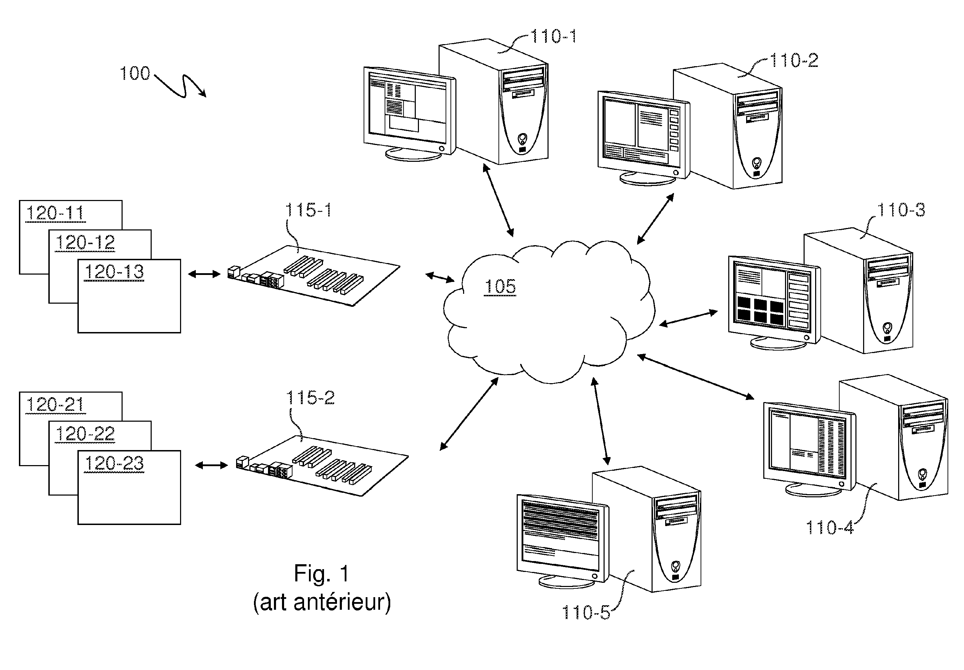

La figure 1 illustre un exemple d'environnement pouvant être utilisé pour simuler l'intégration de composants dans un aéronef. L'environnement 100 comprend ici un réseau 105 auquel sont connecté les ordinateurs ou serveurs 110-1 à 110-5 ainsi que les cartes d'entrée/sortie 115-1 et 115-2, génériquement référencées 115. Les composants dont l'intégration est simulée sont ici les composants 120-11 à 120-13 et 120-21 à 120-23, génériquement référencés 120, reliés aux cartes d'entrée/sortie 115-1 et 115-2, respectivement.

Des outils de test des cartes d'entrée/sortie 115 sont implémentés dans les ordinateurs ou serveurs 110-1 à 110-5, chaque ordinateur ou serveur pouvant implémenter un ou plusieurs outils.

Pour tester la configuration d'une ou de plusieurs cartes d'entrée/sortie 115, un opérateur utilise un outil de test implémenté sur l'un des ordinateurs ou serveurs 110-1 à 110-5 pour transmettre des données à une ou plusieurs cartes d'entrée/sortie 115 sous forme de requêtes. Les résultats de test, obtenus sous forme de réponses aux requêtes, sont analysés par l'opérateur qui vérifie ainsi le déroulement de la simulation et, le cas échéant, détecte des erreurs des configurations des cartes d'entrée/sortie.

Lorsqu'une erreur est détectée, celle-ci est corrigée dans la carte d'entrée/sortie correspondante. Il est alors nécessaire de répéter les tests pour vérifier les résultats. Cependant, en raison du temps nécessaire pour effectuer les tests et par conséquent des coûts engendrés, seul les tests directement liés à l'erreur sont généralement répétés. Il résulte de ces tests partiels que si la correction de l'erreur détectée a créé une nouvelle erreur, cette dernière peut ne pas être détectée avant la phase d'exploitation. Il y a donc une régression du fonctionnement du système d'entrée/sortie.

L'invention permet de résoudre au moins un des problèmes exposés précédemment.

L'invention a ainsi pour objet un procédé pour ordinateur de détection de non régression d'un système d'entrée/sortie à partir d'au moins un poste distant comprenant au moins un outil de test, ledit au moins un outil de test étant adapté à exécuter au moins une commande de test dudit au moins un système d'entrée/sortie, ledit au moins un système d'entrée/sortie et ledit au moins un poste distant étant chacun relié à au moins une interface réseau connectée à un réseau de communication, ce procédé comprenant les étapes suivantes,
- transmission à un dispositif d'enregistrement relié audit réseau de communication d'une instruction pour enregistrer au moins une donnée circulant sur ledit réseau de communication, ladite au moins une donnée à enregistrer correspondant à un résultat d'exécution de ladite au moins une commande de test dudit au moins un outil de test ;
- transmission audit au moins un poste distant d'une instruction d'exécution de ladite au moins une commande de test dudit au moins un outil de test ;
- réception de ladite au moins une donnée enregistrée ;
- réception d'au moins une donnée de référence, ladite au moins une donnée de référence correspondant au résultat attendu de l'exécution de ladite au moins une commande de test dudit au moins un outil de test ; et,
- analyse de ladite au moins une donnée enregistrée selon ladite au moins une donnée de référence.

Le procédé selon l'invention permet ainsi de vérifier, facilement et à faibles coûts, la non régression d'un système d'entrée/sortie dans un environnement complexe de simulation mettant en oeuvre des outils de test répartis géographiquement dans un réseau de communication.

Selon un mode de réalisation particulier, ladite étape d'analyse comprend une étape de comparaison de ladite au moins une donnée enregistrée avec ladite au moins une donnée de référence.

De façon avantageuse, le procédé comprend en outre une étape de transmission d'une instruction de configuration audit au moins un poste distant pour configurer ledit au moins un outil de test.

Le procédé comprend en outre, de préférence, une étape de transmission d'une instruction de configuration audit dispositif d'enregistrement pour le configurer. Le procédé selon l'invention permet ainsi de déterminer les données devant être enregistrées et sur lesquelles peut porter l'analyse de non régression.

Toujours selon un mode de réalisation particulier, le procédé comprend en outre une étape de transmission audit au moins un poste distant d'une instruction de lancement dudit au moins un outil de test.

Avantageusement, le procédé comprend en outre une étape de filtrage de ladite au moins une donnée enregistrée, ladite au moins une donnée enregistrée étant analysée en réponse à ladite étape de filtrage de ladite au moins une donnée enregistrée. Le procédé selon l'invention permet ainsi de déterminer les données sur lesquelles porte l'analyse de non régression.

De façon avantageuse, le procédé comprend en outre une étape de filtrage de ladite au moins une donnée de référence, ladite au moins une donnée enregistrée étant analysée selon ladite au moins une donnée de référence en réponse à ladite étape de filtrage de ladite au moins une donnée de référence. Le procédé selon l'invention permet ainsi de sélectionner les données de référence utilisées pour analyser la non régression du système d'entrée/sortie.

Selon un mode de réalisation particulier, au moins une desdites étapes est mémorisée sous forme d'instruction dans un fichier de type XML, l'interprétation dudit fichier étant indépendante de la nature des commandes de test dudit au moins un outil de test. Le procédé selon l'invention permet ainsi de créer des fichiers de test dont l'interprétation est indépendante de l'architecture de l'environnement de simulation et des outils de test mis en oeuvre.

L'invention a également pour objet un dispositif comprenant des moyens adaptés à la mise en oeuvre de chacune des étapes du procédé décrit précédemment ainsi qu'un programme d'ordinateur comprenant des instructions adaptées à la mise en oeuvre de chacune des étapes du procédé décrit précédemment lorsque ledit programme est exécuté sur un ordinateur.

D'autres avantages, buts et caractéristiques de la présente invention ressortent de la description détaillée qui suit, faite à titre d'exemple non limitatif, au regard des dessins annexés dans lesquels :
- la figure 1 représente un exemple d'environnement pouvant être utilisé pour simuler l'intégration de composants dans un aéronef ;
- la figure 2 illustre un environnement pouvant être utilisé pour simuler l'intégration de composants dans un aéronef, cet environnement comprenant un système de tests automatique, non régressifs, pour la simulation de ces composants ;
- la figure 3 illustre un exemple d'algorithme permettant d'effectuer des tests automatiques des cartes d'entrée/sortie utilisées pour la simulation de l'intégration de composants, conformément à l'invention ;
- la figure 4 illustre un exemple d'une première séquence de test faisant appel à une seconde séquence de test ; et,
- la figure 5 illustre un exemple de dispositif adapté à mettre en oeuvre l'invention ou une partie de l'invention.

De façon générale, l'invention permet de mémoriser les résultats d'un test pour permettre, ultérieurement, d'effectuer automatiquement de nouveaux tests et de comparer les résultats obtenus avec les résultats préalablement mémorisés. Les résultats préalablement mémorisés constituent ainsi des scénarii de référence qui peuvent également être obtenus selon d'autres modes. En particulier, ces scénarii peuvent être obtenus de façon théorique, par exemple par calcul.

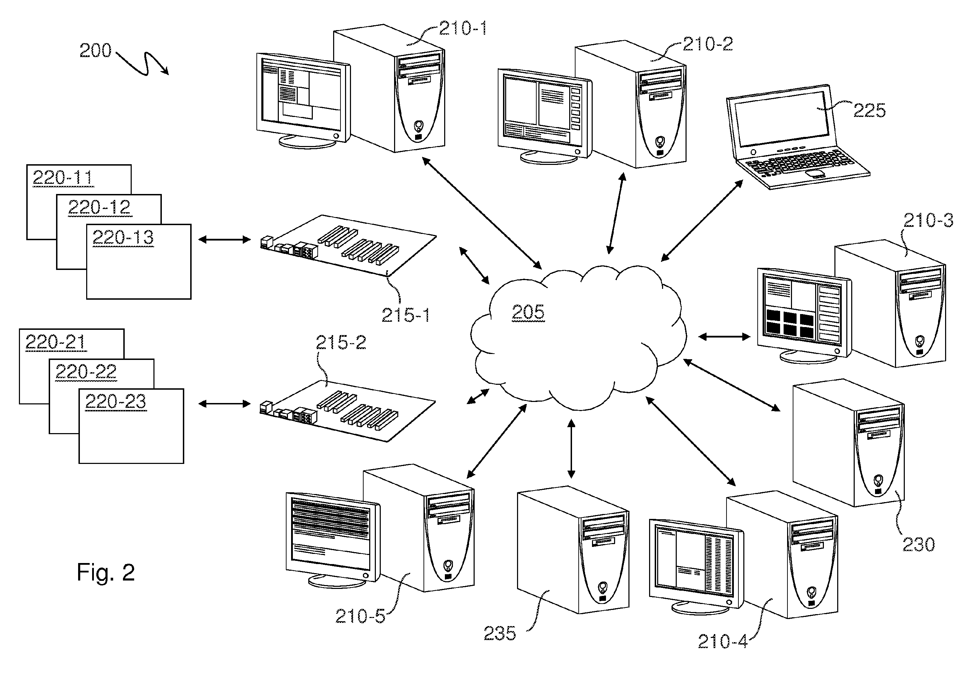

La figure 2 illustre un environnement pouvant être utilisé pour simuler l'intégration de composants dans un aéronef, cet environnement comprenant un système de tests automatiques, non régressifs, des cartes d'entrée/sortie utilisées comme interfaces avec ces composants.

Comme l'environnement 100 illustré sur la figure 1, l'environnement 200 comprend ici un réseau 205 auquel sont connectés les ordinateurs ou serveurs 210-1 à 210-5, génériquement référencés 210, ainsi que les cartes d'entrée/sortie 215-1 et 215-2, génériquement référencées 215. A nouveau, les composants dont l'intégration est simulée sont ici les composants 220-11 à 220-13 et 220-21 à 220-23, génériquement référencés 220, reliés aux cartes d'entrée/sortie 215-1 et 215-2, respectivement.

De façon similaire, les outils de test des cartes d'entrée/sortie 215 sont implémentés dans les ordinateurs ou serveurs 210-1 à 210-5, chaque ordinateur ou serveur pouvant implémenter un ou plusieurs outils de test.

L'environnement 200 comprend en outre un ordinateur ou serveur 225 adapté à mettre en oeuvre un procédé de tests automatiques, non régressifs, des cartes d'entrée/sortie 215 utilisées pour la simulation de l'intégration des composants 220. L'environnement 200 comprend en outre un dispositif d'enregistrement 230 de données circulant sur le réseau et un dispositif de mémorisation 235. Les dispositifs 230 et 235 sont par exemple des ordinateurs ou serveurs.

Bien que l'ordinateur ou serveur 225 soit ici distinct des dispositifs 230 et 235, les fonctions de ces dispositifs peuvent être implémentées dans l'ordinateur ou serveur 225. Il est également possible de n'utiliser qu'un dispositif mettant en oeuvre les fonctionnalités des dispositifs 230 et 235.

Le dispositif 230 est adapté à enregistrer toutes les données circulant sur le réseau 205 ayant des caractéristiques prédéterminées.

Selon un mode de réalisation particulier, le dispositif 230 comprend une mémoire de masse adaptée à enregistrer des données, une interface réseau et des moyens de traitement adaptés à exécuter une application logicielle d'analyse de données de réseau. Une telle application est, par exemple, le logiciel Wireshark dont les caractéristiques sont disponibles sur le site internet www.wireshark.org.

Le dispositif 235 est, par exemple, constitué d'un disque dur et d'une interface réseau.

Toujours selon un mode de réalisation particulier, l'ordinateur ou serveur 225 est utilisé pour lancer et contrôler les outils de test implémentés dans les ordinateurs ou serveurs 210-1 à 210-5, pour contrôler l'enregistrement des données échangées sur le réseau 205 dans le dispositif 230 et pour analyser des données enregistrées par le dispositif 230 selon des données préalablement mémorisées dans le dispositif 235. Les données mémorisées dans le dispositif 235 sont, par exemple, des données enregistrées dans le dispositif 230 qui ont été validées par un opérateur ou de façon automatique.

Avantageusement, un filtrage est réalisé sur les données enregistrées pour sélectionner celles qui doivent être analysées selon des données préalablement mémorisées. Un filtre similaire peut être appliqué aux données préalablement mémorisées pour sélectionner celles devant être utilisées durant l'analyse des résultats de test.

A titre d'illustration, les données enregistrées et celles préalablement mémorisées peuvent être les données émises de la carte d'entrée/sortie 215-1 vers l'ordinateur ou serveur 210-2, la carte d'entrée/sortie 215-1 et l'ordinateur ou serveur 210-2 pouvant être identifié, par exemple, par leur adresse IP (sigle *d'Internet Protocol* en terminologie anglo-saxonne).

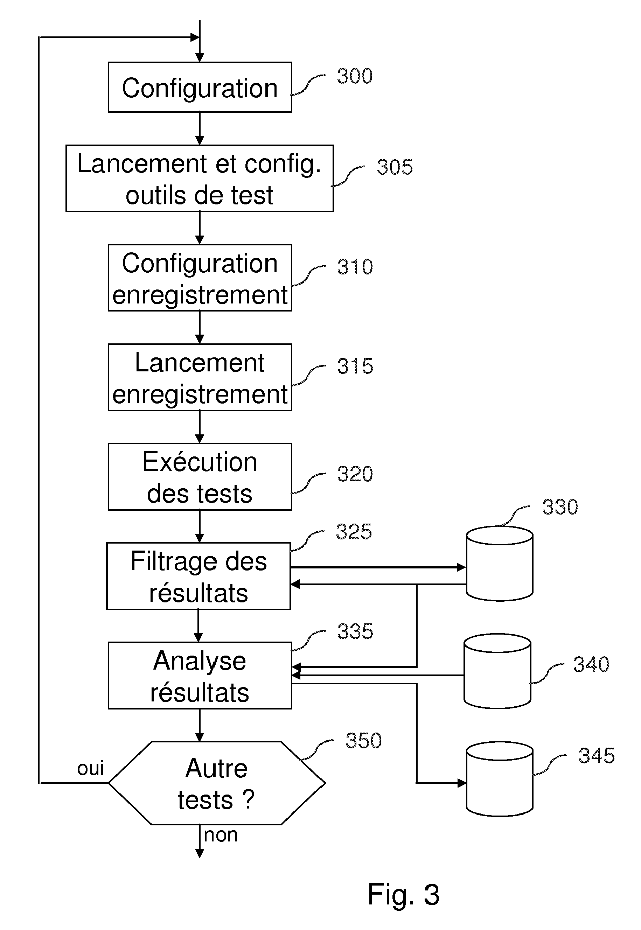

La figure 3 illustre un exemple d'algorithme permettant d'effectuer des tests automatiques des cartes d'entrée/sortie utilisées pour la simulation de l'intégration de composants.

Une première étape (étape 300) a pour objet de configurer l'environnement de test et de simulation. Cette étape consiste, par exemple, à configurer le réseau 205, en particulier à attribuer une adresse à chaque élément du réseau, à établir les canaux et les protocoles de communication utilisés et à mettre sous tension les cartes d'entrée/sortie. Naturellement, l'étape de configuration est liée à la nature de la simulation effectuée, aux composants mis en oeuvre et à d'autres paramètres qui sortent du cadre de l'invention.

Après avoir configuré l'environnement de test, les outils de test devant être utilisés sont lancés et configurés (étape 305) pour permettre l'activation ultérieure de commandes de ces outils. La configuration des outils de test est propre à chaque outil, elle est effectuée de façon standard, par exemple à l'aide d'un fichier de configuration.

Le dispositif d'enregistrement des données échangées sur le réseau est ensuite configuré (étape 310) pour permettre, en particulier, l'identification des données devant être enregistrées. Celles-ci dépendent notamment de la nature des tests effectués.

Il convient de remarquer que si l'étape de configuration du dispositif d'enregistrement des données est ici réalisée après celle des outils de test, l'ordre est sans importance. Ces étapes peuvent également être effectuées simultanément. De plus, les outils de test peuvent être lancés et configurés, ainsi que le dispositif d'enregistrement, en cours de simulation.

Le dispositif d'enregistrement est ensuite activé (étape 315) pour lancer l'enregistrement des données et les tests sont effectués (étape 320). A nouveau, il est possible d'activer le dispositif d'enregistrement en cours de simulation pour cibler les données devant être enregistrées.

Les résultats de tests, enregistrés ici en 330, sont alors de préférence filtrés (étape 325) afin de sélectionner les données sur lesquelles doit porter l'analyse. Un filtre identique peut être appliqué aux données de référence préalablement mémorisées, mémorisées ici en 340, utilisées lors de l'analyse des données enregistrées.

Les résultats de test sont alors analysés, par exemple en comparant les résultats de test enregistrés et sélectionnés avec les données de référence correspondantes préalablement mémorisées (étape 335). Le résultat de la comparaison est ici stocké en 345.

Selon la nature des tests et les besoins des opérateurs, les résultats de l'analyse peuvent prendre plusieurs formes.

Par exemple, les résultats de l'analyse peuvent consister en un fichier dans lequel est donnée, pour chaque résultat de test, une indication d'échec ou de réussite. Alternativement, les résultats d'analyse peuvent consister en un fichier dans lequel figurent les identifiants des tests ayant échoués. Une date peut également être associée aux résultats d'analyse.

Le processus est répété pour chaque test à effectuer (étape 350).

De façon avantageuse, la suite d'instructions permettant d'exécuter l'algorithme décrit en référence à la figure 3 est définie dans un fichier pouvant être facilement manipulé par un opérateur, par exemple un fichier de type XML (sigle *d'Extensible Markup Language* en terminologie anglo-saxonne).

La syntaxe utilisée dans ce fichier pour décrire les instructions de test est, de préférence, indépendante des outils de test mis en oeuvre et des protocoles du réseau de communication reliant les dispositifs utilisés pour effectuer la simulation.

Par ailleurs, le nombre d'instructions utilisables pour accéder aux outils de test est de préférence limité. A titre d'illustration, les commandes suivantes peuvent être utilisées :
- « lancer » ou *run* en terminologie anglo-saxonne : cette commande a pour objet de lancer un outil de test. Cette commande est de préférence suivie de l'identifiant de l'outil de test à lancer ainsi que d'éventuelles options. L'identifiant est par exemple le chemin d'accès et le nom de l'outil de test. Les options sont propres aux outils de test visés, elles concernent par exemple des identifiants de fichiers de configuration de l'outil de test ;
- « faire » ou *do* en terminologie anglo-saxonne : cette commande permet d'exécuter une commande d'un outil de test préalablement lancé. Cette commande est de préférence suivie du nom de la commande à exécuter ainsi que d'éventuelles options liées à la commande visée. De telles options peuvent notamment préciser une adresse de carte d'entrée/sortie et un état dans lequel elle doit être placée ;
- « attendre jusqu'à un événement asynchrone » ou *wait for an asynchronous event* en terminologie anglo-saxonne et « attendre durant un temps prédéterminé » ou *wait for an amount of time* en terminologie anglo-saxonne : ces commandes ont pour objet de suspendre l'exécution de la suite d'instructions jusqu'à l'événement indiqué après la commande ou durant le temps précisé après celle-ci , et,
- « boucler » ou *loop* en terminologie anglo-saxonne : cette commande permet de répéter une suite d'instructions. La séquence d'instructions est répétée autant de fois que précisé.

De la même façon, un nombre de paramètres limité est utilisé pour l'analyse des résultats, c'est-à-dire, par exemple, pour les opérations de comparaison des résultats de test obtenus avec les résultats attendus. Un tel jeu de paramètres est par exemple le suivant :
- « brute » ou *raw* en terminologie anglo-saxonne : ce paramètre indique que les données doivent être comparées octet à octet ;
- « date » : ce paramètre est utilisé pour identifier et afficher une date enregistrée communiquée via le réseau de communication, par exemple une date correspondant à la détection d'une erreur ;
- « valeurs » ou *values* en terminologie anglo-saxonne : ce paramètre permet de spécifier une tolérance. Par exemple si la réponse attendue est 10 avec une tolérance de ±1, les résultats 9 et 11 ne sont pas considérés comme des erreurs lors de l'analyse tandis que les réponses 8 et 12 le seront ; et,
- « temps de réponse » ou *response time* en terminologie anglo-saxonne : ce paramètre permet de donner une tolérance sur un temps de réponse. La mise en oeuvre de ce paramètre est similaire à celle de « valeurs » décrite précédemment.

Toujours selon un mode de réalisation particulier, une suite d'instructions peut faire référence à une autre suite d'instructions. Il est ainsi possible de construire des séquences de test à partir de séquences de test existantes.

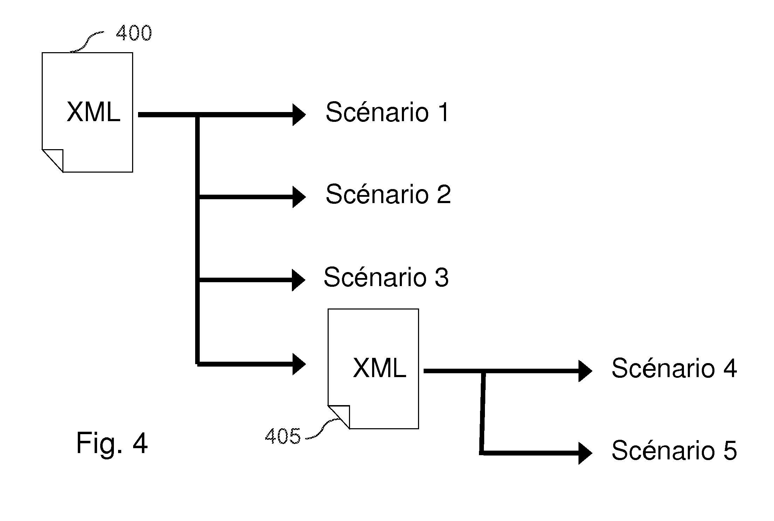

La figure 4 illustre un exemple d'une première séquence de test faisant appel à une seconde séquence de test. Comme illustré, une séquence de test mémorisée dans un fichier XML référencé 400 comprend trois scénarii de test (scénarii 1, 2 et 3) ainsi qu'une référence à une seconde séquence de test. Cette seconde séquence de test, mémorisée dans un second fichier XML, référencé 405, comprend elle-même deux scénarii de test (scénarii 4 et 5).

Les instructions de commandes de test sont de préférence traitées de façon séquentielle pour permettre l'enchaînement des scénarii.

Les séquences de test mémorisées sous forme de fichiers, par exemple de fichiers XML, peuvent être déterminées directement par un opérateur. Alternativement, elles peuvent être obtenues automatiquement à partir d'une description des séquences de test mémorisée, par exemple, dans des fichiers de type texte, par conversion.

Un exemple de séquence de test au format XML est donné en Annexe. Cet exemple a pour objet d'illustrer le format d'un fichier de séquence de test ainsi que celui des commandes utilisées. Les données échangées entre l'ordinateur ou serveur interprétant ce fichier, le ou les ordinateurs ou serveurs hébergeant les outils de test et les cartes d'entrée/sortie utilisées comme interfaces avec les composants sont ici transmises à travers un réseau de type Ethernet sous forme de trames UDP (sigle de *User Datagram Protocol* en terminologie anglo-saxonne).

La séquence de test décrite par ce fichier comporte deux scénarii distincts appelés « scénario 1 » et « scénario 2 » ainsi qu'un appel à un autre fichier décrivant une ou plusieurs séquences de test. Ces scénarii ou appels de scénarii correspondent aux balises appelées TEST_SCENARIO.

Cette séquence de test a pour objet d'établir un diagnostic d'une simulation de vol d'un aéronef.

La balise ANALYSIS a pour objet de définir les caractéristiques des données devant être analysées. Selon le premier scénario, seules les données des messages identifiés « 12345 », de type UDP, du port de communication « 15000 » dont l'adresse IP source est « 192.168.1.4 » et dont l'adresse IP destination est « 239.0.0.1 » sont analysées.

Plus particulièrement, seuls les 12 octets (Length="12"), à partir du deuxième octet (Offset="2"), de ces données sont analysés comme indiqué dans la balise FUNCTIONAL.

La balise FRAMES_FILE est utilisée pour définir les fichiers dans lesquels doivent être enregistrées les données, ici « Scnl\monFichier-enregistre.cap » et « Scn2\monFichier-enregistre.cap » pour les scénarii 1 et 2, respectivement. De façon similaire, la balise FRAMES_FILE est utilisée pour définir les fichiers de référence contenant les données avec lesquelles les données enregistrées doivent être comparées. Les fichiers de référence sont ici « Scn1\monFichier de_reference.cap » et « Scn2\monFichier_de_reference.cap » pour les scénarii 1 et 2, respectivement.

La balise RECORDING_TOOL vise le dispositif permettant d'enregistrer des données circulant sur le réseau de communication, ces données étant définies selon les conditions données en paramètres. Le dispositif d'enregistrement est ici une application logicielle, Wireshark, pouvant être lancée à partir du chemin de localisation « C:\Program Files\Wireshark\tshark.exe ». Les options de lancement de cette application, « - f "ip proto \udp" », permettent de filtrer les données à enregistrer. Parmi les données enregistrées, seules les données correspondant aux paramètres définis dans la balise ANALYSIS sont analysées.

La balise TEST_TOOL désigne un outil de test.

La balise RUN permet de lancer l'application VIPERE, à partir du chemin d'accès "D :\VIPERE.exe" et du fichier de configuration "test.vpj".

La balise WAIT_COMPLETION vient ensuite préciser qu'il est nécessaire de suspendre l'exécution du processus jusqu'à la réception du message "CONFIGURATION". Cependant, la balise WAIT précise qu'au-delà d'un temps de "10000", il n'est plus nécessaire d'attendre ce message, une erreur de type « *time out* » étant générée.

La balise DO permet ensuite de transmettre la commande « MONITOR_ENA » à l'outil de test. Cette commande vise ici à activer (option TRUE) une fonction de diagnostic de la carte d'entrée/sortie ayant l'adresse IP « 151.157.005.002 » .

De même, la balise DO permet de transmettre la commande ACTIVATION qui a pour objet de passer les outils de test et les cartes d'entrée/sortie dans un mode d'utilisation active des composants reliés aux cartes d'entrée/sortie. Les commandes transmises ensuite visent à établir un diagnostic de la carte d'entrée/sortie ayant l'adresse IP « 151.157.005.002 » et à arrêter la fonction de diagnostic.

En fin de scénario, la commande NAMES_DEF permet de vérifier que la carte d'entrée/sortie ayant l'adresse IP « 151.157.005.002 » s'identifie correctement en fin de simulation.

Le scénario se termine ici en arrêtant le dispositif d'enregistrement (balise STOP). Les données enregistrées correspondant aux paramètres définis dans la balise ANALYSIS sont automatiquement analysées dès que le dispositif d'enregistrement est arrêté. Alternativement, il est possible d'utiliser une balise spécifique pour lancer l'analyse.

Comme indiqué précédemment, seules les données correspondant aux paramètres définis dans la balise ANALYSIS, parmi les données enregistrées, c'est-à-dire parmi les données ayant circulé sur le réseau de communication et dont les caractéristiques correspondent à celles prédéterminées dans la balise RECORDING_TOOL, sont analysées.

Le second scénario reprend la même syntaxe de contrôle des outils de test que celle décrite en référence au premier scénario.

Cependant, à titre d'illustration, l'outil de test VIPERE est ici lancé sur un poste distant ayant l'adresse IP « 192.168.2.2 » (<RUN Cmd_Line="D:\VIPERE.exe@192.168.2.3" Option="test.vpj" />).

Par ailleurs, le dispositif d'enregistrement est lancé en cours d'exécution de la simulation, sur un poste distant.

Enfin, après l'exécution du second scénario, un fichier de type XML est appelé pour exécuter d'autres scénarii afin d'illustrer le mécanisme d'imbrication de fichiers de test tel que décrit précédemment en référence à la figure 4.

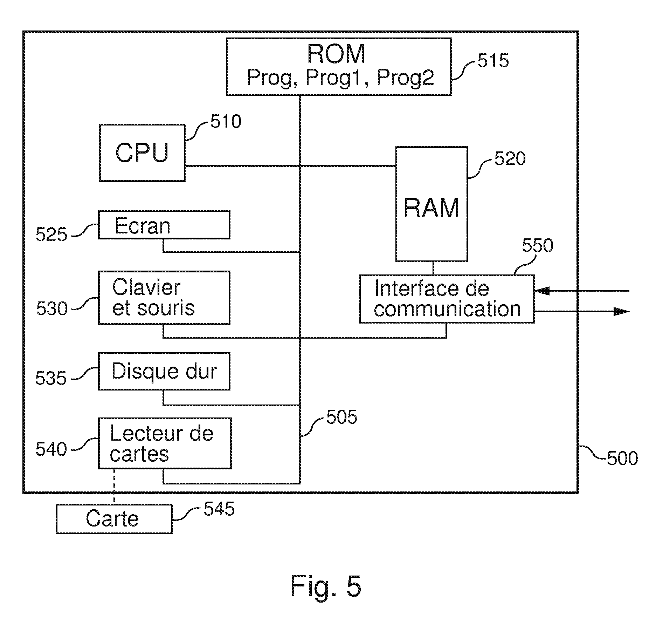

Un dispositif adapté à mettre en oeuvre l'invention ou une partie de l'invention est illustré sur la figure 5. Un tel dispositif est par exemple un calculateur ou un micro-ordinateur.

Le dispositif 500 comporte ici un bus de communication 505 auquel sont reliés :
- une unité centrale de traitement ou microprocesseur 510 (CPU, sigle de *Central Processing Unit* en terminologie anglo-saxonne) ;
- une mémoire morte 515 (ROM, acronyme de *Read Only Memory* en terminologie anglo-saxonne) pouvant comporter les programmes nécessaires à la mise en oeuvre de l'invention ;
- une mémoire vive ou mémoire cache 520 (RAM, acronyme de *Random Access Memory* en terminologie anglo-saxonne) comportant des registres adaptés à enregistrer des variables et paramètres créés et modifiés au cours de l'exécution des programmes précités ; et
- une interface de communication 550 adaptée à transmettre et à recevoir des données, notamment vers et depuis les dispositifs commandés de l'aéronef pour les contrôler et connaître leur état.

Le dispositif 500 dispose également, de préférence, des éléments suivants :
- un écran 525 permettant de visualiser des données telles que des représentations des commandes et de servir d'interface graphique avec l'utilisateur qui pourra interagir avec les programmes selon l'invention, à l'aide d'un clavier et d'une souris 530 ou d'un autre dispositif de pointage tel qu'un écran tactile ou une télécommande ;
- d'un disque dur 535 pouvant comporter les programmes précités et des données traitées ou à traiter selon l'invention ; et
- d'un lecteur de cartes mémoires 540 adapté à recevoir une carte mémoire 545 et à y lire ou à y écrire des données traitées ou à traiter selon l'invention.

Le bus de communication permet la communication et l'interopérabilité entre les différents éléments inclus dans le dispositif 500 ou reliés à lui. La représentation du bus n'est pas limitative et, notamment, l'unité centrale est susceptible de communiquer des instructions à tout élément du dispositif 500 directement ou par l'intermédiaire d'un autre élément du dispositif 500.

Le code exécutable de chaque programme permettant au dispositif programmable de mettre en oeuvre les processus selon l'invention, peut être stocké, par exemple, dans le disque dur 535 ou en mémoire morte 515.

Selon une variante, la carte mémoire 545 peut contenir des données, notamment une table de correspondance entre les événements détectés et les commandes pouvant être sollicitées, ainsi que le code exécutable des programmes précités qui, une fois lu par le dispositif 500, est stocké dans le disque dur 535.

Selon une autre variante, le code exécutable des programmes pourra être reçu, au moins partiellement, par l'intermédiaire de l'interface 550, pour être stocké de façon identique à celle décrite précédemment.

De manière plus générale, le ou les programmes pourront être chargés dans un des moyens de stockage du dispositif 500 avant d'être exécutés.

L'unité centrale 510 va commander et diriger l'exécution des instructions ou portions de code logiciel du ou des programmes selon l'invention, instructions qui sont stockées dans le disque dur 535 ou dans la mémoire morte 515 ou bien dans les autres éléments de stockage précités. Lors de la mise sous tension, le ou les programmes qui sont stockés dans une mémoire non volatile, par exemple le disque dur 535 ou la mémoire morte 515, sont transférés dans la mémoire vive 520 qui contient alors le code exécutable du ou des programmes selon l'invention, ainsi que des registres pour mémoriser les variables et paramètres nécessaires à la mise en oeuvre de l'invention.

L'appareil de communication comportant le dispositif selon l'invention peut également être un appareil programmé. Cet appareil contient alors le code du ou des programmes informatiques par exemple figé dans un circuit intégré à application spécifique (ASIC).

Naturellement, pour satisfaire des besoins spécifiques, une personne compétente dans le domaine de l'invention pourra appliquer des modifications dans la description précédente.

### ANNEXE

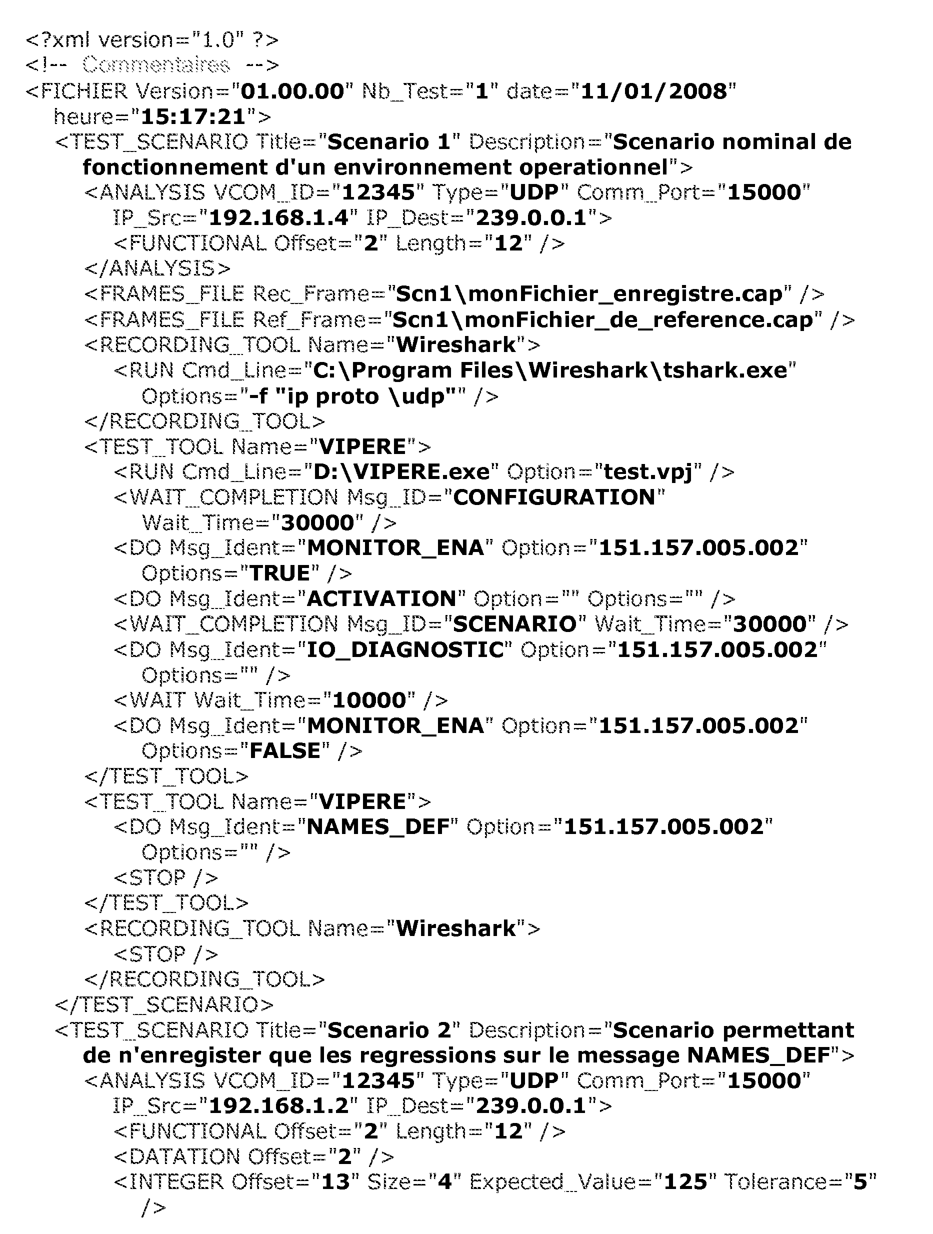

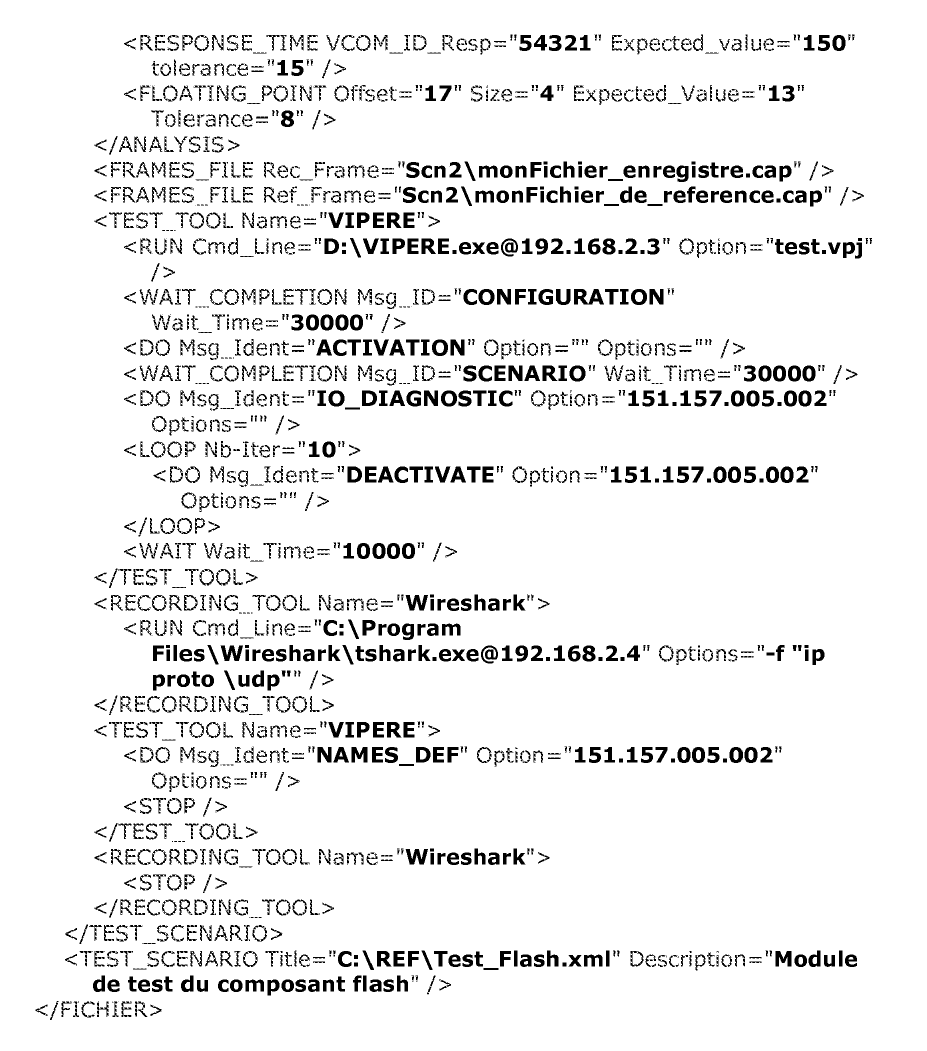

## Revendications

1. Procédé pour ordinateur de détection de non régression d'un système d'entrée/sortie (215) à partir d'au moins un poste distant (210) comprenant au moins un outil de test, ledit au moins un outil de test étant adapté à exécuter au moins une commande de test dudit au moins un système d'entrée/sortie, ledit au moins un système d'entrée/sortie et ledit au moins un poste distant étant chacun relié à au moins une interface réseau connectée à un réseau de communication (205), ce procédé étant **caractérisé en ce qu'**il comprend les étapes suivantes,
- transmission (315) à un dispositif d'enregistrement (230) relié audit réseau de communication d'une instruction pour enregistrer au moins une donnée circulant sur ledit réseau de communication, ladite au moins une donnée à enregistrer correspondant à un résultat d'exécution de ladite au moins une commande de test dudit au moins un outil de test ;
- transmission (320) audit au moins un poste distant d'une instruction d'exécution de ladite au moins une commande de test dudit au moins un outil de test ;
- réception de ladite au moins une donnée enregistrée ;
- réception d'au moins une donnée de référence, ladite au moins une donnée de référence correspondant au résultat attendu de l'exécution de ladite au moins une commande de test dudit au moins un outil de test ; et,
- analyse (335) de ladite au moins une donnée enregistrée selon ladite au moins une donnée de référence.

2. Procédé selon la revendication 1 selon lequel ladite étape d'analyse comprend une étape de comparaison de ladite au moins une donnée enregistrée avec ladite au moins une donnée de référence.

3. Procédé selon la revendication 1 ou la revendication 2 comprenant en outre une étape de transmission (305) d'une instruction de configuration audit au moins un poste distant pour configurer ledit au moins un outil de test.

4. Procédé selon l'une quelconque des revendications précédentes comprenant en outre une étape de transmission (310) d'une instruction de configuration audit dispositif d'enregistrement pour le configurer.

5. Procédé selon l'une quelconque des revendications précédentes comprenant en outre une étape de transmission (305) audit au moins un poste distant d'une instruction de lancement dudit au moins un outil de test.

6. Procédé selon l'une quelconque des revendications précédentes comprenant en outre une étape de filtrage (325) de ladite au moins une donnée enregistrée, ladite au moins une donnée enregistrée étant analysée en réponse à ladite étape de filtrage de ladite au moins une donnée enregistrée.

7. Procédé selon l'une quelconque des revendications précédentes comprenant en outre une étape de filtrage de ladite au moins une donnée de référence, ladite au moins une donnée enregistrée étant analysée selon ladite au moins une donnée de référence en réponse à ladite étape de filtrage de ladite au moins une donnée de référence.

8. Procédé selon l'une quelconque des revendications précédentes selon lequel au moins une desdites étapes est mémorisée sous forme d'instruction dans un fichier de type XML, l'interprétation dudit fichier étant indépendante de la nature des commandes de test dudit au moins un outil de test.

9. Dispositif comprenant des moyens adaptés à la mise en oeuvre de chacune des étapes du procédé selon l'une quelconque des revendications précédentes.

10. Programme d'ordinateur comprenant des instructions adaptées à la mise en oeuvre de chacune des étapes du procédé selon l'une quelconque des revendications 1 à 8 lorsque ledit programme est exécuté sur un ordinateur.
